Europäisches Patentamt

European Patent Office

Office européen des brevets

(11) Veröffentlichungsnummer : **0 291 083 B1**

# (12) EUROPÄISCHE PATENTSCHRIFT

(45) Veröffentlichungstag der Patentschrift :
27.03.91 Patentblatt 91/13

(51) Int. Cl.⁵ : **B65G 57/24**

(21) Anmeldenummer : **88107749.9**

(22) Anmeldetag : **13.05.88**

(54) Verfahren und Anlage zum Überführen von Transportplattformen auf den Hubtisch einer Stapelstation.

(30) Priorität : **14.05.87 DE 3716203**

(43) Veröffentlichungstag der Anmeldung :
**17.11.88 Patentblatt 88/46**

(45) Bekanntmachung des Hinweises auf die
Patenterteilung :
**27.03.91 Patentblatt 91/13**

(84) Benannte Vertragsstaaten :
**AT CH DE FR GB IT LI**

(56) Entgegenhaltungen :
**DE-A- 2 312 048**
**DE-A- 2 603 887**

(73) Patentinhaber : **Jenkner, Erwin**
**Lindenstrasse 13**
**W-7261 Gechingen-Bergwald (DE)**

(72) Erfinder : **Jenkner, Erwin**
**Lindenstrasse 13**
**W-7261 Gechingen-Bergwald (DE)**

(74) Vertreter : **Grosse, Rainer, Dipl.-Ing. et al**
**Gleiss & Grosse Patentanwaltskanzlei**
**Silberburgstrasse 187**
**W-7000 Stuttgart 1 (DE)**

## Beschreibung

Die Erfindung betrifft ein Verfahren gemäß dem Oberbegriff des Anspruches 1 und eine Anlage zur Durchführung dieses Verfahrens.

Es ist bekannt, auf den Hubtisch einer Stapelstation jeweils eine leere Palette aufzubringen, auf die danach Gegenstände unter Absenken des Hubtisches gestapelt werden (DE-AS 20 33 828). Auch ist es bekannt, großformatige Platten in sogenannten Plattenaufteilanlagen oder Buntaufteilsägeanlagen, wie sie bspw. die Firma Holzma Maschinenbau GmbH, D-7260 Calw-Holzbronn, herstellt, zu behandeln, welche jeweils eine Längssäge und eine Quersäge zum Zersägen von großformatigen Platten in kleinere rechteckige Zuschnitte unterschiedlicher Formate aufweisen, wobei die großformatigen Platten einzeln oder zu sogenannten Plattenpaketen geschichtet zersägt werden. Unter rechteckig wird sowohl quadratisch als auch nicht quadratisch verstanden. Die erhaltenen kleinformatigeren Platten oder Zuschnitte bilden dann ebenfalls rechteckige Einzelplatten oder Plattenpakete. Diese müssen dann nach Format sortiert zu Stapelstationen überführt werden, wo sie nach Format sortiert gestapelt werden. Dabei kann auf dem vertikal auf und ab bewegbaren Hubtisch einer solchen Stapelstation jeweils eine einzige Säule gleichformatiger Zuschnitte oder mehrere Säulen gleichformatiger oder unterschiedlich formatiger Zuschnitte gestapelt werden. In letzterem Falle spricht man von einem Stapel aus mehreren Fixmaßen, der also mehrere Säulen oder Einzelstapel aufweist.

Dabei ist es bekannt, auf dem betreffenden Hubtisch den Stapel auf einer Transportplattform zu bilden, die vorzugsweise eine Palette oder eine sogenannte Schonplatte sein kann, die auf den Hubtisch vorangehend aufgebracht wurde, bspw. von Hand, und dann nach Beendigung des Stapelns zusammen mit dem von ihr getragenen Stapel vom Hubtisch abgenommen wird und auf der der Stapel dann bspw. für nachfolgende Transportvorgänge verbleiben kann, bis er irgendwo von ihr wieder abgenommen wird. Paletten oder sonstige Tragplattformen hierfür haben ungefähr rechteckförmige Grundrisse, und zwar sowohl quadratische als auch nicht quadratische rechteckförmige Umrisse und ihre in horizontaler Stellung der betreffenden Transportplattform gemessene Längen und Breiten sind wesentlich größer als ihre vertikalen Dicken oder Höhen. Es stellt ein noch nicht befriedigend gelöstes Problem dar, solche Transportplattformen auf einfache und kostengünstig realisierbare Weise, die auch Teile- oder Vollautomatisierung ermöglicht, auf den Hubtisch zu überführen, und die sich auch für den Fall eignet, daß mehrere Stapelstationen in einer Reihe nebeneinander in geringen Abständen voneinander oder ohne Abstände angeordnet sind.

Es ist deshalb eine Aufgabe der Erfindung, ein Verfahren der im Oberbegriff des Anspruches 1 genannten Art zu schaffen, welches auf einfache, kostengünstig realisierbare Weise rasches Überführen von leeren Transportplattformen auf den Hubtisch einer Stapelstation ermöglicht, wobei dieses Verfahren sich auch für Teil- oder Vollautomatisierung eignen soll und auch dann anwendbar sein soll, wenn Transportplattformen zu mehreren in Reihe nebeneinander angeordneten Stapelstationen überführt werden sollen, wobei diese Stapelstationen ohne Abstand oder in nur geringen Abständen voneinander angeordnet sein können.

Diese Aufgabe wird erfindungsgemäß durch das in Anspruch 1 angegebene Verfahren gelöst. Eine erfindungsgemäße Anlage zur Durchführung dieses Verfahrens ist in Anspruch 11 beschrieben.

Dieses erfindungsgemäße Verfahren und die seiner Durchführung dienende Anlage ermöglicht rasches Überführen von Transportplattformen zu einer oder mehreren Stapelstationen. Solche Transportplattformen kann man auch als Tragplattformen bezeichnen, da sie dem Tragen und Transportieren von Plattenstapeln dienen. Es ist auch dann anwendbar, wenn mehrere Stapelstationen in einer Reihe angeordnet sind, selbst dann, wenn diese Stapelstationen ohne Abstände oder in nur geringen Abständen nebeneinander angeordnet sind. Auch lassen sich Anlagen zur Durchführung des erfindungsgemäßen Verfahrens an bereits bestehende Plattenaufteilanlagen bzw. Buntaufteilsägeanlagen mit zugeordneten Sortiereinrichtungen und Stapelstationen auch nachträglich problemlos anfügen, ohne daß es hierzu Umbauten der bestehenden Anlagen oder allenfalls nur leicht durchzuführender Änderungen bedarf, wobei der Platz für die Zuführanlage zum Zuführen leerer Transportplattformen bei solchen bereits installierten Anlagen normalerweise bereits vorhanden ist. Auch benötigen die der Durchführung des erfindungsgemäßen Verfahrens dienenden Anlagen nur relativ wenig Grundfläche, da infolge der zu dem Hubtisch hochkant transportierbaren Transportplattformen nur Transportbahnen relativ geringer Breite vorgesehen werden können. An der Stapelstation kann so die Zufuhr der Transportplattformen zu ihr vorderseitig der Stapelstation erfolgen, vorzugsweise unterhalb eines vor ihrem Hubtisch ortsfest angeordneten Plattenzuführtisches und vorzugsweise von derselben Seite der Stapelstation aus, von der aus auch die zu stapelnden Platten auf die Stapelstation überführt werden.

Dieses Verfahren eignet sich insbesondere für Stapelstationen, die Buntaufteilsägeanlagen mit zugeordneten Sortieranlagen nachgeordnet oder zugeordnet sind, wie Plattenaufteil- und -sortieranlagen oder dgl., wobei eine solche Plattenaufteil- oder Buntaufteilsägeanlage in bekannter Weise eine Längssäge und eine Quersäge aufweist, die großformatige Platten oder Plattenpakete in Zuschnitte unterschiedlichen Formates zersägt, die dann nach Format sortiert auf den Hubtisch der Stapelstationen auf vorher auf die Hubtische aufgebrachten Transportplattformen gestapelt werden und bei denen es sich um Platten zur Herstellung von Möbeln oder auch um sonstige Platten handeln kann. Dabei eignet sich dieses erfindungsgemäße Verfahren auch besonders gut für Stapelstationen, vor deren Hubtischen in Höhe von deren vorzugsweise ungefähr obersten Stellungen stationäre Zuführtische, die man als Plattenzuführtische bezeichnen kann, angeordnet sind, vorzugsweise Luftkissentische, auf die die zu stapelnden Zuschnitte, d.h. zu stapelnden Platten oder Plattenpakete bspw. von Hand oder selbsttätig überführt werden und von denen aus sie dann auf die auf den Hubtischen angeordneten Transportplattformen bzw. auf die auf ihnen im Aufbau begriffenen Stapel überführt werden. Man kann dann die leere Transportplattform unterhalb dieses Zuführtisches in ihre dem Kippen auf den betreffenden Hubtisch dienende vertikale oder schräg zur Vertikalen gerichtete Grundstellung bringen und dann auf den Hubtisch, wenn sich dieser vorzugsweise in seiner untersten Hubstellung befindet, in der der vorangehend gebildete Stapel zusammen mit der ihn tragenden Transportplattform von ihm abgeführt wurde, unter Kippen aufbringen und dann durch horizontales Verschieben in ihre endgültige Position bringen. Dies hat u.a. auch folgenden Vorteil. Zur Bildung eines Stapels wird der Hubtisch aus einer oberen oder seiner obersten Stellung schrittweise entsprechend dem Anwachsen des Stapels abgesenkt, so daß die Oberseite der jeweils obersten gestapelten Platte für das Überführen der nächsten Platte oder des nächsten Plattenpakets auf sie in Höhe des Zuführtisches sich befindet. Wenn dann der Hubtisch in einer vorbestimmten unteren, vorzugsweise seiner untersten Stellung angekommen ist, ist dann die Bildung des Stapels beendet und er wird zusammen mit der ihn tragenden Transportplattform vom Hubtisch wegbefördert, bspw. zu einer ihn weitertransportierenden angetriebenen Rollenbahn oder direkt durch einen Gabelstapler oder dgl. vom Hubtisch abgenommen, u.s.w. Man kann dann sofort, ohne die Höhenstellung des Hubtisches zu ändern, eine neue leere Transportplattform auf diesen Hubtisch selbsttätig aufbringen, so daß hierfür keine unnötige Zeit verlorengeht, weil hierzu keine Höhenverstellung des Hubtisches erforderlich ist. Auch kann das Kippen der Transportplattform auf den Hubtisch sehr rasch erfolgen, vorzugsweise ganz oder im wesentlichen durch freies Umfallen. Auch ermöglicht es die Erfindung, einer Mehrzahl von in Reihen nebeneinander angeordneten Stapelstationen eine einzige Zuführtransportbahn für Transportplattformen zuzuordnen, wobei diese Transportplattformen auf dieser Zuführtransportbahn bereits in vertikalen oder schräg zur Vertikalen geneigten Stellungen angeordnet sein können, vorzugsweise bereits in den vertikalen oder schräg zur Vertikalen geneigten Lagen, in denen sie sich später auch in ihren Grundstellungen vor dem jeweiligen Hubtisch befinden, so daß diese Zuführtransportbahn entsprechend schmal sein kann und dieser Zutransport der Transportplattformen folglich ebenfalls nur wenig Platz benötigt. Die Zuführtransportbahn kann so lang sein, daß sie die Transportplattformen auch in Grundstellung vor dem oder den Hubtischen noch trägt oder vor dem oder den Hubtischen könnten eine oder mehrere weitere Transportbahnen vorzugsweise fluchtend mit der Zuführtransportbahn angeordnet sein, die die Transportplattformen in ihre Grundstellungen vor dem oder den Hubtischen bringen und hier tragen. Die Transportbahn oder die -bahnen, die dem Zutransport von Transportplattformen zu der oder den Stapelstationen dient bzw. dienen, können angetrieben sein, vorzugsweise eine oder mehrere angetriebene Rollenbahnen bilden. Doch kommen auch andere Bahnen in Frage, bspw. angetriebene Bahnen mit endlosen Förderbändern oder dgl.

Der selbsttätige Transport der Transportplattform in die Grundstellung vor einem Hubtisch einer Stapelstation kann bevorzugt durchweg in vertikaler oder zur Vertikalen schräg geneigter Stellung der Transportplattform erfolgen. Dabei liegt sie dann mit einer ihrer Schmalseiten auf der jeweiligen Transportbahn auf. Sie kann dann in ihrer vertikalen oder schräg zur Vertikalen geneigten Stellung bspw. mittels einer oder mehrerer seitlicher Führungen gehalten sein, an denen sie anliegt oder anliegen kann. Diese Führungen können vorzugsweise Gleitführungen sein, bspw. eine oder mehrere Stangen, Schienen oder dgl. aufweisen oder bilden. Oder sie können auch bewegliche Führungsglieder aufweisen, bspw. stationär angeordnete, drehbar gelagerte Rollen oder endlose, um Umlenkwalzen oder dgl. umgelenkte Bahnen aufweisen, wobei diese Bahn bzw. diese Rollen oder dgl. nicht angetrieben zu sein brauchen, da sie nur der seitlichen Abstützung der Transportplattformen dienen.

Vorzugsweise kann die Transportplattform in ihrer Grundstellung vor dem betreffenden Hubtisch, auf den sie unter Kippen abgelegt wird, unter einem Winkel von 0 bis 30° zur Vertikalen geneigt sein, vorzugsweise unter einem solchen Winkel, daß sie sich dabei in einer Stellung befindet, in der sie von selbst auf den Hubtisch durch Umfallen kippen kann, sobald sie in dieser Stellung haltende Stützmittel von ihr weggeführt werden. Es ist dann nur einseitige Stützung der Transportplattform in ihrer Grundstellung sowie ggf. auch auf der oder den ihrem Transport in diese Grundstellung dienenden Transportbahn oder -bahnen erforderlich. Es ist jedoch auch möglich, ihre Stellung während des selbsttätigen Transportes in die Grundstellung vor dem betreffenden Hubtisch zu ändern, bspw. ihre Neigung zur Vertikalen während ihres Transports auf einer oder mehreren angetriebenen Transportbahnen zu ändern. Bspw. kann vorgesehen sein, sie zur Stapelstation vertikal zu transportieren und kurz vor oder bei Ankunft an der betreffenden Stapelstation sie in Richtung auf den Hubtisch zu so weit zu neigen, daß sie nach Wegführen von sie in dieser schräg geneigten Stellung haltenden Stützmitteln dann unter freiem Umfallen auf den Hubtisch fällt.

Man kann oft zweckmäßig auch vorsehen, daß das Kippen der Transportplattform aus ihrer Grundstellung vor dem Hubtisch unter ständigem Führen bzw. Stützen erfolgt, bis sie bereits fast ganz oder vollständig auf den Hubtisch gelangt ist.

Bevorzugt kann vorgesehen sein, daß die Transport plattform, wenn sie aus ihrer Grundstellung vor dem Hubtisch auf diesen unter Kippen in horizontal auf ihm aufliegende Stellung überführt ist, durch selbsttätige Lageverstellmittel in ihre vorbestimmte endgültige Position auf diesem Hubtisch verschoben wird. Die Lageverstellmittel können vorzugsweise einen oder mehrere geradlinig verstellbare Stößel oder Stempel aufweisen, die vorzugsweise mittels Kolben-Zylinder-Einheiten bewegbar sind, aber auch auf andere Weise bewegt werden können, bspw. über Zahnstangengetriebe oder dgl. Auch andere Möglichkeiten hierfür bestehen, bspw. das Ausrichten der Transport- oder Tragplattformen auf dem Hubtisch durch einen oder mehrere schwenkbar gelagerte, angetriebene Hebel.

Die Erfindung ist auch bei solchen Stapelstationen anwendbar, deren Hubtische horizontal verfahrbar sind, um auf ihm gebildete Stapel zu dem Abtransport der Stapel dienenden weiterführenden Rollenbahnen oder dgl. zu überführen und wobei diese Hubtische dann wieder in ihre Normalstellung zurückgefahren werden, wo dann auf ihnen wieder gestapelt wird. Dies ermöglicht es, wenn mehrere solche Stapelstationen in Reihe nebeneinander angeordnet sind, daß die Abfuhr der auf ihnen gebildeten Stapel individuell völlig unabhängig von den anderen Stapelstationen möglich ist, wobei dann sofort nach Rückkehr des Hubtisches in seine Normalstellung eine leere Transportplattform auf ihn aufgebracht und dann wieder mit dem Stapeln eines neuen Stapels begonnen werden kann.

Das erfindungsgemäße Verfahren ermöglicht auch besonders rasches Auswechseln einer einen Stapel tragenden Transportplattform auf einem Hubtisch einer Stapelstation gegen eine neue leere Transportplattform.

In der Zeichnung sind Ausführungsbeispiele der Erfindung dargestellt. Es zeigen in schematischer Darstellung :

Fig. 1 eine Seitenansicht einer Stapelstation mit einer zugeordneten Vorrichtung zum Überführen von leeren Paletten oder Schonplatten auf sie,

Fig. 2 die Einrichtung nach Fig. 1 in einer Stellung, in der eine Palette gerade beginnt, auf den Hubtisch der Stapelstation zu kippen,

Fig. 3 die Einrichtung nach Fig. 1 in einer Stellung in der die vorangehend auf den Hubtisch umgefallene Palette in eine vorbestimmte Stellung auf dem Hubtisch verschoben wird,

Fig. 4 die Einrichtung nach Fig. 1, welche jedoch auf die Zuführung von dünneren Schonplatten anstelle von dickeren Paletten umgestellt ist,

Fig. 5 eine Draufsicht auf zwei parallel zueinander angeordnete Reihen von Stapelstationen, die dem Stapeln von auf einer Buntaufteilsägeanlage gesägten rechteckigen Platten unterschiedlicher Formate dienen, wobei die einzelne Stapelstation bspw. gemäß den Fig. 1 bis 4 ausgebildet sein kann,

Fig. 6 eine vergrößerte Draufsicht auf die vor den Hubtischen einer Reihe von Stapelstationen der Anlage nach Fig. 5 angeordneten Einzeltransportbahnen.

Fig. 7 eine Variante der Einrichtung nach Fig. 1,

Fig. 8 einen Schnitt durch Fig. 6 gesehen entlang der Schnittlinie 8-8 in vergrößerter Darstellung.

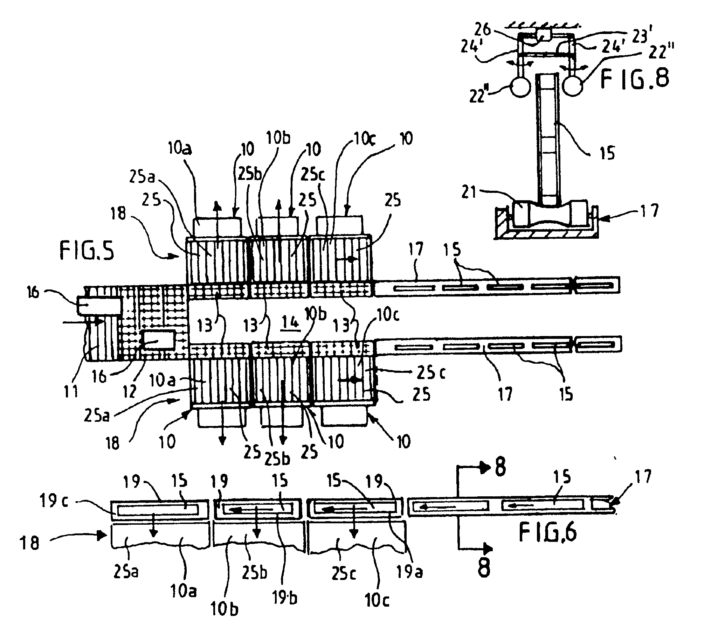

Bei der Anlage nach Fig. 5 werden auf einer nicht dargestellten Buntaufteilsägeanlage aus ebenfalls nicht dargestellten großformatigen Platten durch sie hergestellte kleinere rechtecktige Platten (Zuschnitte) oder Plattenpakete (Zuschnittpakete) 16 zu in zwei Reihen 18 angeordneten Stapelstationen 10 nach Format sortiert gefördert, wo sie gestapelt werden, wobei jede dabei gebildete Säule aus Platten 16 bzw. der Stapel aus Platten 16 gleichen Formats besteht, die kantengleich übereinander angeordnet sind. Es sind hier zwei Reihen 18 zu je drei unmittelbar nebeneinander angeordneten Stapelstationen 10 dargestellt, doch kann die Zahl der Reihen und der Stapelstationen auch größer oder kleiner sein. Zu diesen Stapelstationen 10 führt eine angetriebene Rollenbahn 11, an die ein mehrteiliger, breiter Luftkissentisch 12 anschließt, an den schmalere Luftkissentische 13 anschließen, die an den Stapelstationen 10 ungefähr in Höhe der höchsten Stellungen von deren Hubtischen 25 angeordnet sind. Zwischen den beiden Reihen der schmaleren Luftkissentische 13 befindet sich ein Bedienungsgang 14, wo sich ein oder mehrere Arbeiter aufhalten, die die von der Rollenbahn 11 und dem Luftkissentisch 12 zugeführten Platten oder Plattenpakete 16 über die schmäleren Luftkissentische 13 zu den Stapelstationen 10 und an diesen auf die Hubtische 25 bzw. auf die auf den Hubtischen im Aufbau befindlichen Stapel nach Format sortiert überführen, wobei sich auf jedem Hubtisch 25 eine vorangehend auf ihn aufgebrachte Transportplattform 15 befindet, auf der der betreffende Stapel gebildet wird. Wenn so auf einem Hubtisch 25 ein vollständiger oder gewünschter Plattenstapel gebildet ist, der aus einer oder mehreren Säulen aus Platten bestehen kann, also ein Stapel aus einem Fixmaß oder ein Stapel aus mehreren Fixmaßen sein kann, dann wird dieser Stapel zusammen mit der ihn tragenden Transportplattform 15 von dem Hubtisch 25 abgeführt, was zweckmäßig erfolgen kann, wenn sich dieser Hubtisch 25 in abgesenkter Stellung, vorzugsweise in seiner untersten Stellung befindet, so daß sich jeder abgeführte Stapel auf einer Transportplattform 15 befindet, die bei solchen Buntaufteilsägeanlagen im allgemeinen eine Palette oder eine Schonplatte ist.

Das Abführen der Stapel zusammen mit den sie tragenden Transportplattformen 15 von den Hubtischen 25 kann in an sich bekannter Weise erfolgen. Bspw. können diese Hubtische 25 angetriebene Rollenbahnen aufweisen, die die auf ihnen gebildeten Stapel zusammen mit den sie tragenden Transportplattformen 15 zu einer oder mehreren weiterführenden, angetriebenen Rollenbahnen oder auf Transportwagen fördern oder auf sonstige Weise abgeführt werden. In diesem Ausführungsbeispiel kann bspw. vorgesehen sein, die Hubtische 25a und 25b zum Abführen der Stapel zuerst im ganzen horizontal aus der Stapelstationsreihe 18 herauszuführen und dann erst die Stapel mit den sie tragenden Transportplattformen 15 von ihnen zu nicht dargestellten Rollenbahnen oder dgl. abzuführen, wogegen von den Hubtischen 25c die Stapel zusammen mit den sie tragenden Transportplattformen 15 direkt in Pfeilrichtung zu nicht dargestellten Rollenbahnen abgeführt werden können. Auch andere Möglichkeiten bestehen.

Nach Abführen eines Stapels zusammen mit der ihn tragenden Transportplattform 15 von einem Hubtisch 25, kehrt der leere Hubtisch 25 im Falle der Station 10a bzw. 10b in seine Normalstellung zurück und kann dann wieder mit einer leeren Transportplattform 15 beschickt werden. Da die Hubtische 25c nicht horizontal verfahren werden können, können sie sofort nach jedesmaligem Leerwerden wieder mit leeren Transportplattformen 15 beschickt werden.

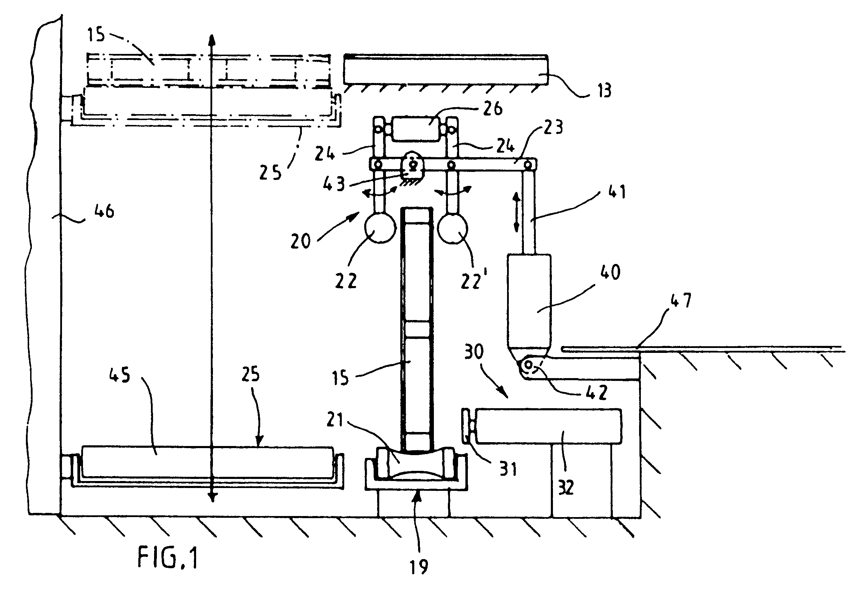

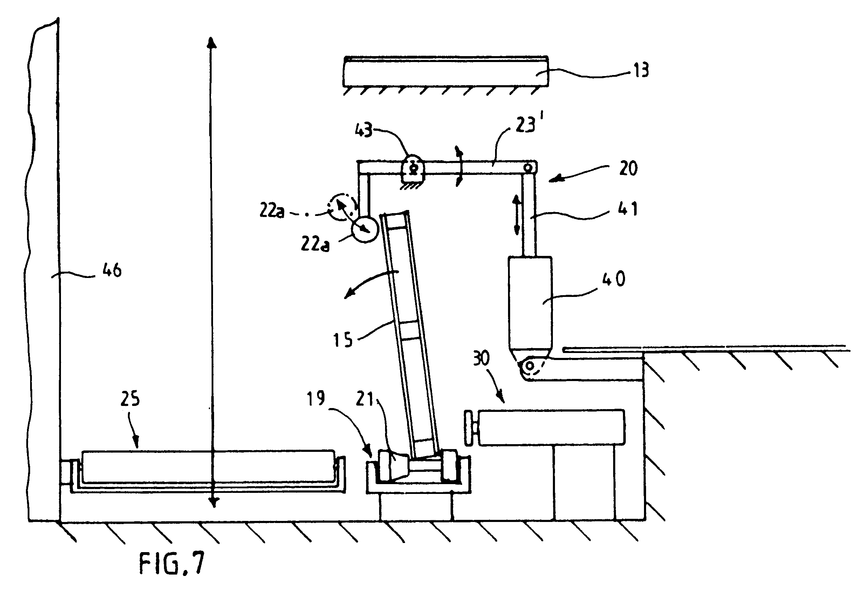

Diese Anlage nach Fig. 5 weist zu diesem Zweck pro Stapelstationsreihe 18 je eine angetriebene Zuführrollenbahn 17 auf, die gemäß Fig. 5 unmittelbar vor der betreffenden hintersten Stapelstation 10c dieser Reihe 18 endet. Die Rollen 21 dieser Zuführrollenbahn 17 sind angetrieben und können bspw. die aus Fig. 1 oder 7 ersichtliche rotationssymmetrische Gestalt aufweisen. Vor jeder der drei unmittelbar nebeneinander angeordneten Stapelstationen 10a bis 10c, die eine Reihe 18 bilden, ist im Abstand unterhalb jedes Luftkissentisches 13 je eine angetriebene Einzelrollenbahn 19 angeordnet, die dieselbe prinzipielle Bauart wie die angetriebenen Zuführrollenbahnen 17 aufweisen können, also deren angetriebenen Rollen 21 genau gleich sein können wie die der Zuführrollenbahnen 17. Jede Bahn 17 und 19 ist für sich wahlweise zum Fördern von Transportplattformen 15 ein- und ausschaltbar.

In Fig. 6 sind die einer Reihe 18 von Stapelstationen 10a bis 10c zugeordneten, im einzelnen mit 19a 19b, 19c bezeichneten Einzelrollenbahnen 19 für die Transportplattformen 15 schematisch dargestellt.

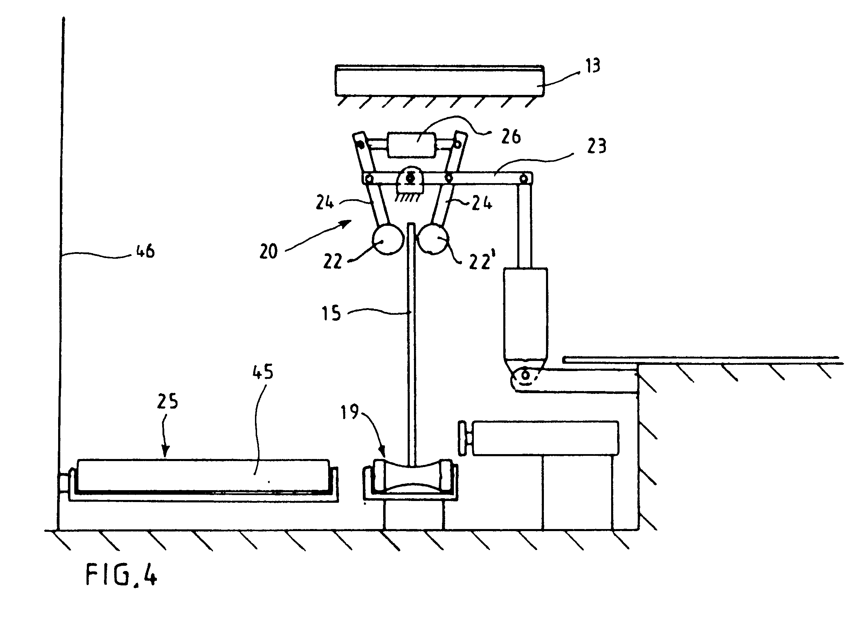

In dem Ausführungsbeispiel nach den Fig. 1 bis 4 werden die Transportplattformen 15 in ungefähr vertikaler Stellung sowohl auf der nicht dargestellten Zuführrollenbahn 17 als auch auf den Einzelrollenbahnen 19 gefördert, wozu sie auf den vertieften Mittelbereichen der angetriebenen, rotationssymmetrischen Rollen 21 mit ihren unteren Schmalseiten ungefähr vertikal aufsitzen und in den vorgesehenen Stellungen durch seitliche Führungen 22, 22', 22'' gegen Umkippen gehalten werden. Diese bestehen hier aus horizontalen, parallel zu den Transportrichtungen der Transportplattformen 15 verlaufenden Führungsstangen 22, 22', 22'', die sie gegen Umkippen halten und nahe der oberen Enden der Transportplattformen verlaufen. Der Abstand dieser Führungsstangen 22, 22' bzw. 22'', 22'' voneinander kann zur Anpassung an die unterschiedlichen Dicken von Paletten 15 (Fig.1-3) und Schonplatten 15 (Fig. 4) verstellt werden, was im Ausführungsbeispiel nach Fig. 1-4 und 8 dadurch erfolgen kann, indem diese Führungsstangen 22, 22' bzw. 22'',22'' an an einer Querstange 23 bzw. 23' drehbar gelagerten Hebeln 24 bzw. 24' angeordnet sind, deren von den Führungsstangen abgewendeten oberen Enden mittels Stellmotoren 26 verstellt werden können.

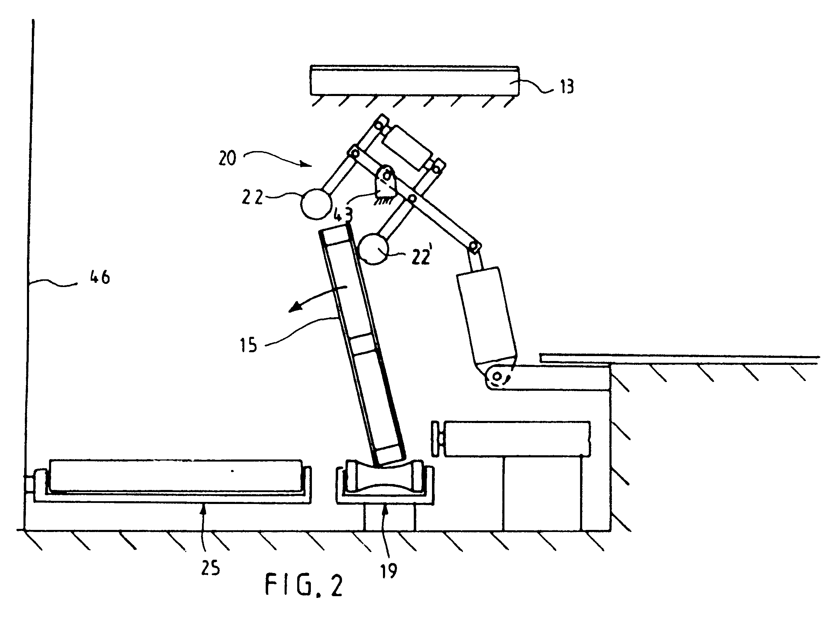

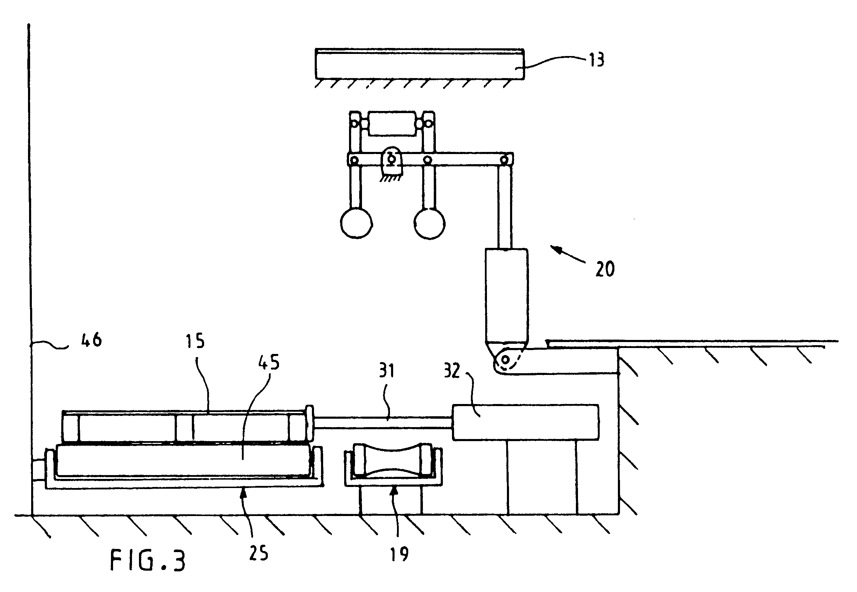

Die oberhalb jeder einzelnen Rollenbahn 19 angeordneten Führungsstangen 22, 22', die sich ungefähr über die Länge der zugeordneten Einzelrollenbahn 19 erstrecken, können zum Kippen und Freigeben der Transportplattform 15 mittels einer Kolben-Zylinder-Einheit 40 bewegt werden, deren unteres Ende an einem stationären Lager 42 drehbar angelenkt ist und ihre Kolbenstange 41 ist an die Querstange 23 angelenkt, die ihrerseits an einem stationären Lager 43 wie dargestellt drehbar gelagert ist. Damit können die Führungsstangen 22, 22' aus den in Fig. 1, 3 und 4 dargestellten Grundstellungen in die in Fig. 2 dargestellten Schwenkstellungen durch Einziehen der Kolbenstange 41 verschwenkt werden, in der die vorher zwischen den beiden Führungsstangen 22, 22' gehaltene Transportplattform 15 durch die Führungsstange 22' so weit verschwenkt wird und die andere Führungsstange 22 aus diesem Schwenkweg herausbewegt wird, daß sie nunmehr auf die Rollenbahn 45 des Hubtisches 25 fällt und sich dann in horizontaler Lage auf dieser Rollenbahn 45 befindet, wobei sie jedoch noch nicht ihre endgültige Lage auf dieser angetriebene Rollen aufweisenden Rollenbahn 45 eingenommen hat. Vielmehr wird sie in ihre endgültige Position durch einen oder mehrere Stößel 31 einer Verschiebevorrichtung 30 geschoben, die hier an den vorderen Enden von Kolbenstangen von pneumatischen oder hydraulischen Kolben-Zylinder-Einheiten 32 angeordnet sind. In Fig. 3 ist zu sehen, daß hier diese Stößel 31 eine Palette 15 in ihre vorgesehene Stellung auf der Rollenbahn 45 des Hubtisches 25 geschoben haben. Dann werden die Stößel 31 zurückgefahren und der Hubtisch 25 nach oben in die in Fig. 1 strichpunktierte Lage hochgefahren, wo nunmehr mit dem Stapeln der Platten oder -pakete 16 auf der Transportplattform 15 begonnen wird. Wenn die gewünschte Stapelhöhe erreicht ist, was zweckmäßig normalerweise erst dann der Fall ist, wenn der mittels einer ihn tragenden Hubvorrichtung 46 vertikal auf- und abbewegbare Hubtisch 25 in seine unterste Stellung abgesenkt ist. Dann wird die Palette 15 mit dem von ihr getragenen Stapel vom Hubtisch 25 abgeführt. Vorangehend war eine neue leere Palette 15 oder Schonplatte 15 in die in Fig. 1 bzw. Fig. 4 dargestellte Ausgangsstellung vor diesen Hubtisch 25 gebracht worden und diese wird nunmehr durch Verschwenken der Führungsstangen 22, 22' wieder auf die Rollenbahn 45 des Hubtisches 25 gekippt und dann mittels des oder der Stößel 31 wieder in die vorgesehene Endstellung auf diesem Hubtisch 25 gebracht, und es kann dann wieder mit dem nächsten Aufstapeln von Platten 16 begonnen werden.

Die Zufuhr der Transportplattformen 15 zu den Einzelrollenbahnen 19 und damit in ihre Grundstellungen auf diesen, aus denen sie dann auf die Hubtische 25 gekippt werden, kann bspw. zweckmäßig wie folgt vorgenommen werden :

Am rechtsseitigen Ende (Fig, 5) jeder der beiden Zuführrollenbahnen 17 befindet sich deren Beladestation, wo bspw. durch eine Bedienungsperson oder automatisch auf sie nacheinander leere Transportplattformen 15 aufgebracht werden können. Nach jedem Aufbringen einer Transportplattform 15 auf eine solche Zuführrollenbahn 17 wird diese so lange eingeschaltet, bis die auf ihr befindlichen Transportplattformen um die Länge oder um etwas mehr als die Länge einer Transportplattform 15 weiter gefördert sind und eine Transportplattform 15 am linken Ende der betreffenden Zuführrollenbahn 17 angekommen ist. Es sei angenommen, daß sich zunächst noch keine Transportplattformen 15 auf den Einzelrollenbahnen 19 vor den Stapelstationen 10 befinden. Man kann dann durch geeignetes Ein- und Ausschalten der Zuführtransportbahnen 17 und der Einzeltransportbahnen 19 auch auf die Einzeltransportbahnen 19 je eine leere Transportplattform 15 bis in die vorgesehenen Grundstellungen fördern. Dabei fördert jede einer Einzelrollenbahn 19 in Transportrichtung der Transportplattformen 15 vorgeordnete andere Einzelrollenbahnen 19 auch Transportplattformen 15 zu der ihr jeweils nachgeordneten Einzeltransportbahn 19. Auf diese Weise können auf allen Einzelrollenbahnen 19 Transportplattformen 15 in ihren Grundstellungen angeordnet und dann wieder wie beschrieben, auf die Hubtische 25 gekippt und auf diesen ausgerichtet werden. Man kann dann sofort wieder eine neue leere Transportplattform 15 auf eine geleerte Einzelrollenbahn 19 überführen und auf ihr in ihrer Grundstellung so lange belassen, bis der zugeordnete Hubtisch geleert wurde und auf ihn dann eine neue leere Transportplattform gekippt wird, die sich bereits in ihrer Grundstellung an dieser Stapelstation 10 befand. Mit einer entsprechenden Programmsteuervorrichtung kann die Zufuhr der Transportplattformen zu den Einzeltransportbahnen und ihr Anhalten in den vorgesehenen Grundstellungen und ihr Kippen auf die Hubtische und ihr Ausrichten auf diesen selbsttätig durchgeführt werden.

Wenn an einer beliebigen Stapelstation 10 ein Hubtisch 25 geleert und auf ihn wieder eine leere Transportplattform 15 gekippt wurde, kann sofort an ihr mit dem Stapeln begonnen werden. Dabei können die Zustände der anderen Stapelstationen beliebig sein, bspw. an allen anderen Stapelstationen gleichzeitig gestapelt werden. Wenn an einer beliebigen Stapelstation die zugeordnete Einzelrollenbahn geleert wurde, kann auf sie sofort wieder eine neue leere Transportplattform 15 in ihre Grundstellung überführt werden, was selbsttätig durch entsprechenden Antrieb der Zuführrollenbahn 17 und erforderlichenfalls ihr vorgeordneten Einzelrollenbahn oder -bahnen und ihren eigenen Antrieb erfolgen kann. Jede hierdurch geleerte, ihr vorgeordnete Einzelrollenbahn 19 kann von der ihr vorgeordneten Einzelrollenbahn 19 bzw. von der ihr vorgeordneten Zuführrollenbahn 17 ebenfalls sofort wieder mit je einer Transportplattform beschickt werden, so daß sich wieder auf allen Einzelrollenbahnen 19 je eine Transportplattform befindet. Die jeweilige Grundstellung einer Transportplattform auf einer Einzelrollenbahn 19 kann bspw. durch Ankommen an einem heb- und senkbaren Anschlag erfolgen oder lichtschrankengesteuert oder auf sonstige Weise erfolgen. Wenn bspw. von der in Transportrichtung der Transportplattformen vordersten Einzelrollenbahn 19a einer Reihe 18 eine Transportplattform 15 auf den ihr zugeordneten Hubtisch 25 gekippt wurde, dann wird nur diese vorderste Einzelrollenbahn 19a mittels der Zuführrollenbahn 17 mit einer neuen Transportplattform 15 beschickt. Wenn bspw. die mittlere Einzelrollenbahn 19 einer Reihe 18 durch Kippen einer auf ihr befindlichen Transportplattform 15 auf den zugeordneten Hubtisch 25 geleert wurde, dann wird von der vordersten Einzelrollenbahn 19a aus auf sie eine leere Transportplattform 15 überführt und diese vorderste Einzelrollenbahn 19a dann von der Zuführrollenbahn 17 aus mit einer neuen Transportplattform 15 beschickt, u.s.w. All dies kann selbsttätig gesteuert programm- und/oder zustandsgesteuert ablaufen.

Es ist also außerordentlich rasches und einfaches Aufbringen der Transportplattformen 15 auf die Hubtische 25 der Stapelstationen 10 möglich. Da sich die Einzelrollenbahnen 19 und die ihnen zugeordneten Haltevorrichtungen 20 für die auf sie aufgebrachten Transportplattformen 15 sich ganz oder im wesentlichen unter den an diesen Stapelstationen 10 angeordneten Zuführtischen 13 befinden, wird der Bedienungsgang 14 zwischen diesen Zuführtischen 13 durch die Zuführung der Transportplattformen 15 nicht eingeschränkt. Im Ausführungsbeispiel nach Fig. 1 steht die Zylinder-Kolben-Einheit 32 etwas über den Zuführtisch 13 über, liegt jedoch in einer Vertiefung des Bodens des Maschinensaales und über ihr befindet sich ein Rost 47, der als Fußboden für das Begehen dieses Bedienungsganges 14 mit dient. Es ist also überhaupt kein Platz des Bedienungsganges 14 für diese Zufuhr der Transportplattformen 15 verbraucht.

Alle einer Stapelstationsreihe 18 zugeordneten Transportbahnen 17 und 19 bilden eine gerade Reihe, in der diese Transportbahnen aneinander anschließen zur Übergabe von Transportplattformen, wobei der Transport der Transportplattformen auf ihnen immer in der gleichen Richtung verläuft.

Die Haltevorrichtung 20 nach Fig. 7 entspricht der nach den Fig. 1 bis 4 mit dem einzigen Unterschied, daß die Transportplattformen 15 schräg zur Vertikalen geneigt auf der Transportbahn 17 bzw. 19 durch pro Transportbahn je eine einzige seitliche Führungsstange 22a so gehalten sind, daß sie, wenn sie sich in ihrer Grundstellung vor einem Hubtisch 25 befinden, bereits in Richtung auf den Hubtisch 25 zu etwas geneigt sind, so daß sie nach Wegführen der der betreffenden Einzelrollenbahn 19 zugeordneten horizontal gerichteten Führungsstange 22a in die strichpunktierte Stellung auf den Hubtisch 25 durch ihr Eigengewicht fällt. In solchen geneigten Stellungen können die Transportplattformen zweckmäßig auch bereits auf der Zuführrollenbahn 17 gehalten sein, so daß diese Zuführrollenbahn 17 dann ebenfalls nur eine seitliche, horizontale Führungsstange zum Verhindern des Umfallens der auf ihr befindlichen Transportplattformen benötigt. Beim Transport der Transportplattformen auf den Transportbahnen gleiten die an die Führungsstangen angelehnten Transportplattformen mit ihren Breitseiten an diesen Führungsstangen. Die der Zuführrollenbahn 17 zugeordnete Führungsstange 22a kann dabei unbeweglich angeordnet sein, wogegen jeder Einzelrollenbahn 19 je eine eigene Führungsstange 22a zugeordnet ist, die mittels eines als Kolben-Zylinder-Einheit ausgebildeten Steilmotors 40 über den Hebel 23' aus der voll ausgezogen dargestellten Stellung in die strichpunktierte Stellung überführt werden kann, in der die Transportplattform 15 freigegeben ist zum Umfallen auf den Hubtisch 25. Nach dem Kippen einer von ihr zuvor seitlich gestützten Transportplattform 15 auf den betreffenden Hubtisch 25 wird dann diese Führungsstange 22a wieder in ihre voll ausgezogen dargestellte Normalstellung zurückgeführt und die nächste Transportplattform 15 kann auf diese Einzelrollenbahn 19 gebracht werden. Die Rollen der Rollenbahnen 17 und 19 sind so ausgebildet, daß die mit Schmalseiten auf ihnen aufliegenden Transportplattformen auf ihnen gegen seitliches Abrutschen durch je eine Abstufung jeder angetriebenen Rolle 21 gesichert sind. Es ist denkbar, sie gegen seitliches Verrutschen auch auf andere Weise zu sichern, bspw. durch nahe der Rollen 21 angeordnete zusätzliche Führungsstangen oder dergl. Die Einrichtung nach Fig. 7 benötigt keine Anpassung an Transportplattformen unterschiedlicher Dicke.

Die Transportplattformen 15, die mittels der Zuführanlage zu den Hubtische 25 überführbar sind, können, wie dargelegt, unterschiedliche Dicken aufweisen. Auch ihre Breiten und Längen können in gewissen Grenzen unterschiedlich sein. Die Größen der auf ihnen zu stapelnden Platten können abwärts von einem Größtmaß beliebige Bemaßungen haben.

## Ansprüche

1. Verfahren zum Überführen von ungefähr rechteckige Grundrisse aufweisenden Transportplattformen, vorzugsweise von Paletten oder Schonplatten, deren Breiten und Längen größer als ihre Dicken sind, auf einen Hubtisch einer Stapelstation, an der auf die auf dem Hubtisch horizontal aufliegende Transportplattform Platten vorzugsweise unter Absenken des Hubtisches gestapelt werden, dadurch gekennzeichnet, daß die jeweilige, leere Transportplattform vor dem Hubtisch in vertikaler oder zur Vertikalen schräg geneigter Grundstellung angeordnet und aus dieser auf den in Aufnahmestellung befindlichen Hubtisch unter Kippen in horizontale Stellung aufgebracht und dann durch horizontales Verschieben in ihre endgültige Position gebracht wird.

2. Verfahren nach Anspruch 1, dadurch gekennzeichnet, daß die leere Transportplattform unter einen Zuführtisch (13) für zu stapelnde Platten in ihre Grundstellung gebracht wird und so von derselben Seite, von der auch die zu stapelnden Platten vom Zuführtisch aus zum Hubtisch überführt werden, ebenfalls auf den Hubtisch überführt wird und/oder daß die leere Transportplattform in ihrer Grundstellung vor der Stapelstation zur Vertikalen in einem Winkel von höchstens 30° geneigt ist.

3. Verfahren nach Anspruch 1 oder 2, dadurch gekennzeichnet, daß die leere Transportplattform durch ihre Schwerkraft auf den Hubtisch kippt, vorzugsweise die Transportplattform in ihrer Grundstellung vor dem Hubtisch der Stapelstation in einem Winkel zur Vertikalen geneigt angeordnet ist, aus dem sie durch ihr Eigengewicht auf den Hubtisch kippen kann, sobald ein sie in ihrer Grundstellung haltender Anschlag oder dgl. frei gibt.

4. Verfahren nach einem der Ansprüche 1 bis 3, dadurch gekennzeichnet, daß sich der Hubtisch der Stapelstation in seiner Aufnahmestellung für eine leere Transportplattform in seiner auch den Abtransport der auf ihm gebildeten Stapel dienenden Stellung, vorzugsweise in seiner niedrigsten Hubstellung befindet.

5. Verfahren nach einem der vorhergehenden Ansprüche, dadurch gekennzeichnet, daß die leere Transportplattform mittels mindestens einer vorzugsweise angetriebenen Transportbahn, vorzugsweise mindestens einer Rollenbahn, auf der sie in vertikaler oder zur Vertikalen schräg geneigten Stellung, die vorzugsweise ungefähr der Richtung, in der sie in ihrer Grundstellung vor dem Hubtisch steht, entspricht, mit einer Schmalseite aufliegt, zu der Stapelstation transportiert wird.

6. Verfahren nach Anspruch 5, dadurch gekennzeichnet, daß auf einer Zuführtransportbahn gleichzeitig eine Mehrzahl von leeren Transportplattformen in Reihe hintereinander transportiert werden, die zu einer vor einer Stapelstation angeordneten, vorzugsweise mit ihr fluchtenden Einzeltransportbahn führt, auf die jeweils eine Transportplattform von der Zuführtransportbahn überführt wird, und daß diese Transportplattform von dieser Einzeltransportbahn aus, auf der sie ihre Grundstellung einnehmen kann, entweder auf den Hubtisch dieser Stapelstation gekippt oder zu einer nachgeordneten Einzelrollenbahn, die einer anderen Stapelstation zugeordnet ist, weitertransportiert wird.

7. Verfahren nach einem der vorhergehenden Ansprüche, dadurch gekennzeichnet, daß bei einer Mehrzahl von in einer Reihe ohne oder in gleichen Abständen nebeneinander angeordneten Stapelstationen allen diesen Stapelstationen die leeren Transportplattformen entlang einem geraden Transportweg in derselben Transportrichtung zugeführt werden, wobei immer dann, wenn vor einer dieser Stapelstationen Platz für eine neue leere Transportplattform frei wird, alle sich in Transportrichtung vor dieser Stapelstation auf dem oder den betreffenden Transportbahnen befindlichen Transportplattformen um eine dem Mittenabstand zweier benachbarter Stapelstationen entsprechende Wegstrecke weitertransportiert werden, wodurch die frei gewordene Stelle vor der betreffenden Stapelstation wieder mit einer leeren Transportplattform beschickt wird.

8. Verfahren nach einem der vorhergehenden Ansprüche, dadurch gekennzeichnet, daß der Transport der leeren Transportplattformen zu der Stapelstation auf mindestens einer vorzugsweise angetriebenen, ortsfest angeordneten Transportbahn in vertikaler oder zur Vertikalen schräg geneigten Stellung erfolgt, in der die Transportplattformen mit Schmalseiten auf der betreffenden Transportbahn aufsitzen, und daß die Transportplattformen in diesen Stellungen durch mindestens eine seitliche Führung, an die sie breitseitig zur Anlage kommen können, gegen Umfallen gesichert werden.

9. Verfahren nach einem der vorhergehenden Ansprüche, dadurch gekennzeichnet, daß zum Kippen der leeren Transportplattform aus ihrer Grundstellung auf den Hubtisch der Stapelstation ein oder mehrere Stützmittel, die sie in ihrer Grundstellung gegen Kippen sichern, so bewegt wird bzw. werden, daß sie schließlich frei auf den Hubtisch umfallen kann, vorzugsweise die leere Transportplattform in einer so schräg zur Vertikalen geneigten Grundstellung an dem oder den Stützmitteln anliegt, daß sie nach Wegführen des oder der Stützmittel von ihr von selbst auf den Hubtisch durch die auf sie einwirkende Schwerkraft umkippt, vorzugsweise derart, daß gegenüber beiden Breitseiten der Transportplattform ihre Grundstellung sichernde Stützmittel vorhanden sind, von denen mindestens ein Stützmittel die Transportplattform zum Kippen in die gewünschte Kipprichtung bewegt und mindestens ein anderes Stützmittel vorher oder dabei aus dem Kippweg der Transportplattform heraus bewegt wird.

10. Verfahren nach einem der vorhergehenden Ansprüche, dadurch gekennzeichnet, daß die Transportplattform während ihres Kippens aus der Grundstellung in die horizontale Stellung auf den Hubtisch ständig durch mindestens ein sie hierbei stützendes Stützmittel gegen freies Fallen gesichert ist oder erst kurz vor zur Auflage kommen auf diesem Hubtisch von diesem Stützmittel für restlichen freien Fall freigegeben wird und/oder daß die auf den Hubtisch durch Kippen überführte Transportplattform auf der Transportplattform in horizontaler Lage noch in eine vorbestimmte Endstellung selbsttätig bewegt wird.

11. Anlage zum Überführen von Transportplattformen auf einen Hubtisch einer Stapelstation zur Durchführung des Verfahrens nach einem der vorhergehenden Ansprüche, dadurch gekennzeichnet, daß vor der Stapelstation (10) eine Haltevorrichtung (20) zum Halten einer Transportplattform (15) in vertikaler oder zur Vertikalen schräg geneigter Grundstellung angeordnet ist, daß ferner Mittel vorgesehen sind, um die von dieser Haltevorrichtung in ihrer Grundstellung gehaltene Transportplattform auf den in einer vorbestimmten Empfangsstellung befindlichen Hubtisch (25) der Stapelstation unter Kippen in horizontaler Stellung aufzubringen, und daß Verschiebemittel (30) vorgesehen sind, um die auf den Hubtisch der Stapelstation in horizontale Stellung gekippte Transportplattform (15) in eine vorbestimmte horizontale Stellung auf diesem Hubtisch zu überführen.

12. Anlage nach Anspruch 11, dadurch gekennzeichnet, daß die Schiebemittel mindestens einen selbsttätig bewegbaren Stößel (31) oder dgl. aufweisen, vorzugsweise jeder Stapelstation zwei Stößel (31), die mittels zugeordneten Kolben-Zylinder-Einheiten (32) oder dgl. bewegbar sind, zugeordnet sind.

13. Anlage nach Anspruch 11 oder 12, dadurch gekennzeichnet, daß die Haltevorrichtung (20) Stützmittel aufweist, das bzw. die dem seitlichen Stützen einer in der Grundstellung vor dem Hubtisch (25) befindlichen Transportplattform dient oder dienen und mindestens ein Stützglied (22, 22') aufweist oder aufweisen, das zum Kippen der Transportplattform auf den Hubtisch in eine dieses Kippen bewirkende und-/oder ermöglichende Stellung überführbar ist.

14. Anlage nach einem der Ansprüche 11 bis 23, dadurch gekennzeichnet, daß mindestens eine Transportbahn (19) für die Überführung von Transportplattformen in ihre Grundstellungen vor der Stapelstation (10) vorgesehen ist und vorzugsweise mindestens eine Transportbahn (17) vorgesehen ist, die Transportplattformen zu einer Reihe von Stapelstationen führen kann.

15. Anlage nach Anspruch 14, dadurch gekennzeichnet, daß vor jeder Stapelstation einer Reihe von nebeneinander angeordneten Stapelstationen eine eigene Einzeltransportbahn (19) angeordnet ist und daß den in einer geraden Reihe angeordneten Einzeltransportbahnen (19) eine mit ihnen fluchtende Zuführtransportbahn (17) zum Zuführen von leeren Transportplattformen (15) zu der ihr benachbarten Einzeltransportbahn (19) vorgeordnet ist.

16. Anlage nach Anspruch 14 oder 15, dadurch gekennzeichnet, daß die leeren Transportplattformen (15) sowohl auf der Transportbahn bzw. auf allen Transportbahnen (17, 19) in vertikalen oder schräg zur Vertikalen geneigten Stellungen transportierbar sind, wobei sie vorzugsweise mit Schmalseiten auf der betreffenden Transportbahn aufliegen, die vorzugsweise eine Rollenbahn ist, und dabei durch seitliche Führungsmittel (22") am Umfallen gehindert sind.

17. Anlage nach einem der Ansprüche 14 bis 16, dadurch gekennzeichnet, daß mindestens eine Transportbahn (17, 19) eine angetriebene Transportbahn, vorzugsweise eine angetriebene Rollenbahn ist, wobei die Rollenbahn (17, 19) vorzugsweise Rollen aufweisen kann, deren rotationssymmetrischen Oberflächenbereiche, an denen die Transportplattformen zum Aufliegen kommen, so gestaltet sind, daß die Transportplattformen an ihnen gegen seitliches Abrutschen gehindert sind.

18. Anlage nach einem der Ansprüche 11 bis 17, dadurch gekennzeichnet, daß Steuermittel zum selbsttätigen Steuern des Überführens der Transportplattformen in die Grundstellung und des Kippens auf den Hubtisch und des Verschiebens auf ihm in eine vorbestimmte horizontale Stellung vorgesehen sind und/oder daß die dem Halten einer Transportplattform in ihrer Grundstellung vor der Stapelstation (10) dienende Haltevorrichtung (20) zum Halten von Transportplattformen unterschiedlicher Dicke ausgebildet ist.

19. Anlage nach einem der Ansprüche 11 bis 18, dadurch gekennzeichnet, daß an der Stapelstation (10) ein vor dem Hubweg des Hubtisches (25) angeordneter Zuführtisch (13) in vorbestimmter Höhe stationär angeordnet ist, auf den die auf dem Hubtisch jeweils zu stapelnden Platten (16) aufbringbar und von ihm aus auf den Hubtisch bzw. auf den auf ihm in Aufstapelung befindlichen mindestens einen Stapel überführbar sind und daß die Haltevorrichtung (20) zum Halten einer Transportplattform (15) in ihrer Grundstellung an dieser Stapelstation so angeordnet und ausgebildet ist, daß sie die jeweilige Transportplattform unterhalb dieses Zuführtisches (13) in ihrer Grundstellung hält.

## Claims

1. Method for transferring transportation platforms having an approximately rectangular outline, preferably pallets or protective plates, the width and length of which are greater than their thickness, to a lifting table of a stacking station at which plates are stacked, preferably by lowering said lifting table, on said transportation platform resting horizontally on said lifting table, characterized in that the respective empty transportation platform stands vertically or at an incline to the vertical in its initial position in front of said lifting table and is moved out of this position onto said lifting table standing in its receiving position by tilting into the horizontal position and is then placed in its final position by horizontal displacement.

2. Method as defined in claim 1, characterized in that said empty transportation platform is moved into its initial position underneath a feed table (13) for plates to be stacked and thus likewise transferred onto said lifting table from the same side from which said plates to be stacked are transferred from said feed table to said lifting table, and/or in that said empty transportation platform is inclined in its initial position in front of said stacking station at an angle of 30 degrees at the most to the vertical.

3. Method as defined in claim 1 or 2, characterized in that said empty transportation platform tilts onto said lifting table owing to the force of gravity, said transportation platform preferably being inclined in its initial position in front of said lifting table of said stacking station at an angle to the vertical from which it can tilt under its own weight onto said lifting table once a stop or the like holding it in its initial position is released.

4. Method as defined in one of claims 1 to 3, characterized in that in its receiving position for an empty transportation platform, said lifting table of said stacking station is also in its position for removal of said stacks formed thereon, preferably in its lowest lifting position.

5. Method as defined in one of the preceding claims, characterized in that said empty transportation platform is transported to said stacking station by means of at least one preferably driven transportation track, preferably at least one roller track, on which it rests with a narrow side in a vertical position or in a position at an incline to the vertical which preferably corresponds approximately to the direction in which it stands in its initial position in front of said lifting table.

6. Method as defined in claim 5, characterized in that a plurality of empty transportation platforms arranged one behind the other in a row are simultaneously transported on a feed transportation track which leads to an individual transportation track arranged in front of a stacking station and preferably in alignment therewith and onto which one transportation platform respectively is transferred from said feed transportation track, and in that this transportation platform is either tilted from this individual transportation track on which it can assume its initial position onto said lifting table of this stacking station or transported further to a following individual roller track associated with another stacking station.

7. Method as defined in one of the preceding claims, characterized in that where there is a plurality of stacking stations arranged in a row or at identical spacings alongside one another, said empty transportation platforms are fed to all of these stacking stations along a straight transportation path in the same direction of transportation, and whenever room is made in front of one of these stacking stations for a new empty transportation platform, all of the transportation platforms on the pertinent transportation track or tracks before this stacking station in the direction of transportation are always transported further by an amount corresponding to half of the spacing of two neighbouring stacking stations, whereby the position which has become free in front of the pertinent stacking station is filled again with an empty transportation platform.

8. Method as defined in one of the preceding claims, characterized in that transportation of said empty transportation platforms to said stacking station is carried out on at least one preferably driven, stationarily arranged transportation track in a vertical position or in a position at an incline to the vertical in which said transportation platforms rest with their narrow sides on said respective transportation track, and in that said transportation platforms are secured in these positions against falling over by at least one guide at the sides against which they can lie with their broad sides.

9. Method as defined in one of the preceding claims, characterized in that in order to tilt said empty transportation platform out of its initial position onto said lifting table of said stacking station, one or several supporting means for securing it in its initial position against tilting is or are moved such that it can finally fall freely onto said lifting table, said empty transportation platform preferably resting in an initial position at such an incline to the vertical against said supporting means that after said supporting means is or are moved away from it, it falls over by itself onto said lifting table by the force of gravity acting on it, supporting means preferably being provided for securing said transportation platform in its initial position with respect to both broad sides thereof, at least one of said supporting means moving said transportation platform so it tilts in the desired tilting direction and at least one other supporting means being moved previously or during this out of the tilting path of said transportation platform.

10. Method as defined in one of the preceding claims, characterized in that said transportation platform during its tilting from the initial position into the horizontal position onto said lifting table is constantly secured against free falling by at least one supporting means supporting it during this, or only shortly before coming to rest on this lifting table is released by this supporting means for the rest of the free fall, and/or in that said transportation platform transferred by tilting onto said lifting table is automatically moved in its horizontal position on said transportation platform into a specified final position.

11. Installation for transferring transportation platforms to a lifting table of a stacking station for performing the method as defined in one of the preceding claims, characterized in that a holding device (20) for holding a transportation platform (15) in an initial position which is vertical or at an incline to the vertical is arranged in front of said stacking station (10), in that means are furthermore provided for bringing said transportation platform held by this holding device in its initial position onto said lifting table (25) of said stacking station standing in a specified receiving position by tilting into a horizontal position, and in that displacement means (30) are provided for transferring said transportation platform (15) tilted into a horizontal position onto said lifting table of said stacking station into a specified horizontal position on this lifting table.

12. Installation as defined in claim 11, characterized in that said displacement means comprise at least one automatically moveable ram (31) or the like, each stacking station preferably having two rams (31) associated therewith which are moveable by means of associated piston-cylinder units (32) or the like.

13. Installation as defined in claim 11 or 12, characterized in that said holding device (20) comprises supporting means which serves or serve to support at the sides a transportation platform standing in its initial position in front of said lifting table (25) and which comprises or comprise at least one supporting member (22, 22') which to tilt said transportation platform onto said lifting table is transferrable into a position bringing about and/or enabling this tilting.

14. Installation as defined in one of claims 11 to 13, characterized in that at least one transportation track (19) is provided for transferring transportation platforms into their initial positions in front of said stacking station (10) and preferably at least one transportation track (17) is provided for taking transportation platforms to a row of stacking stations.

15. Installation as defined in claim 14, characterized in that each stacking station of a row of stacking stations arranged alongside one another has its own individual transportation track (19) arranged in front of it, and in that a feed transportation track (17) precedes said straight row of individual transportation tracks (19) in alignment with these for feeding empty transportation platforms (15) to the individual transportation track (19) adjacent to it.

16. Installation as defined in claim 14 or 15, characterized in that said empty transportation platforms (15) are transportable both on said transportation track and on all transportation tracks (17, 19) in a vertical position or in a position at an incline to the vertical, and they preferably rest with their narrow sides on the pertinent transportation track, preferably a roller track, and are thereby prevented from falling over by guide means (22″) at the sides.

17. Installation as defined in one of claims 14 to 16, characterized in that at least one transportation track (17, 19) is a driven transportation track, preferably a driven roller track, said roller track (17, 19) preferably comprising rollers, the surface regions on which said transportation platforms come to rest being symmetrical with respect to rotation and of such design that said transportation platforms are secured thereat against sliding off at the sides.

18. Installation as defined in one of claims 11 to 17, characterized in that control means are provided for automatically controlling the transferral of said transportation platforms into the initial position and the tilting onto said lifting table and the displacement thereon into a specified horizontal position and/or in that said holding device (20) serving to hold a transportation platform in its initial position in front of said stacking station (10) is designed for holding transportation platforms of varying thickness.

19. Installation as defined in one of claims 11 to 18, characterized in that there is arranged stationarily at said stacking station (10) at a specified height in front of the lifting path of said lifting table (25) a feed table (13) onto which said plates (16) to be stacked on said lifting table can be brought and transferred from it onto said lifting table or onto the at least one stack stacked up thereon, and in that said holding device (20) for holding a transportation platform (15) in its initial position at this stacking station is arranged and designed so as to hold said respective transportation platform in its initial position underneath this feed table (13).

## Revendications

1. Procédé pour transférer des plates-formes de transport de plan sensiblement rectangulaire, de préférence des palettes ou des plaques de ménagerie, dont les largeurs et longueurs sont plus grandes que leurs épaisseurs, à une table élévatrice d'une station d'empilage à laquelle des panneaux sont empilés sur la plate-forme de transport reposant horizontalement sur la table élévatrice, de préférence avec abaissement de ladite table élévatrice, **caractérisé en ce** que la plate-forme de transport vide considérée est placée devant la table élévatrice dans une position de base horizontale ou inclinée par rapport à la verticale, et qu'elle est chargée sur la table élévatrice placée en position de réception en basculant dans la position horizontale, puis amenée dans sa position définitive par translation horizontale.

2. Procédé selon la revendication 1, caractérisé en ce que la plate-forme de transport vide est amenée sous une table d'amenée (13) dans sa position de base pour les panneaux à empiler, transférée ainsi également à la table élévatrice par le même côté que celui par lequel les panneaux à empiler sont amenés à la table élévatrice à partir de la table d'amenée ; et/ou que la plate-forme de transport vide forme dans sa position de base devant la station d'empilage un angle maximum de 30° avec la verticale.

3. Procédé selon l'une des revendications 1 ou 2, caractérisé en ce que la plate-forme de transport vide bascule par sa pesanteur sur la table élévatrice, et que la plate-forme de transport est disposée, dans sa position de base devant la station d'empilage, sous un angle par rapport à la verticale de telle façon qu'elle peut basculer sous l'effet de son poids propre sur la table élévatrice dès qu'une butée ou analogue qui la maintient dans sa position de base la libère.

4. Procédé selon l'une des revendications 1 à 3, caractérisé en ce que dans sa position de réception pour une plate-forme de transport vide, la table élévatrice de la station d'empilage se trouve dans la position servant également à l'évacuation de la pile formée, de préférence dans sa position de levage la plus basse.

5. Procédé selon l'une des revendications précédentes, caractérisé en ce que la plate-forme de transport vide est amenée vers la station d'empilage au moyen d'au moins une bande transporteuse, de préférence entraînée et constituée par au moins un transporteur à rouleaux, sur laquelle elle repose avec un petit côté en position verticale ou inclinée par rapport à la verticale qui correspond approximativement à la direction qu'elle occupe dans sa position de base devant la table élévatrice.

6. Procédé selon la revendication 5, caractérisé en ce qu'une pluralité de plates-formes de transport sont amenées en ligne les unes après les autres sur une bande transporteuse d'amenée qui conduit à une bande transporteuse individuelle disposée devant une station d'empilage et alignée de préférence avec elle et à laquelle est transférée respectivement une plate-forme de transport par la bande transporteuse d'amenée ; et que, à partir de cette bande transporteuse individuelle sur laquelle elle peut prendre sa position de base, ladite plate-forme de transport est soit basculée sur la table élévatrice de cette station d'empilage, soit acheminée vers une bande transporteuse individuelle montée en aval et associée à une autre station d'empilage.

7. Procédé selon l'une des revendications précédentes, caractérisé en ce que, pour une pluralité de stations d'empilage disposées sans intervalle en une seule rangée ou à des intervalles réguliers les unes à côté des autres, les plates-formes de transport vides sont amenées à toutes ces stations d'empilage le long d'un chemin de transport rectiligne et suivant la même direction de transport, à chaque fois qu'une place pour une nouvelle plate-forme de transport vide est dégagée devant l'une de ces stations d'empilage, toutes les plates-formes de transport se situant, dans la direction de transport, en amont de cette station d'empilage sur la ou les bande(s) transporteuse(s) considérée(s) étant avancées d'une distance correspondant à l'entraxe de deux stations d'empilage voisines, ce qui a pour effet que l'endroit libéré en amont de la station d'empilage considérée est à nouveau chargé d'une plate-forme de transport vide.

8. Procédé selon l'une des revendications précédentes, caractérisé en ce que l'acheminement des plates-formes de transport vides vers la station d'empilage se fait sur au moins une bande transporteuse de préférence entraînée et stationnaire, dans une position verticale ou inclinée par rapport à la verticale dans laquelle les plates-formes de transport reposent avec les petits côtés sur la bande transporteuse considérée ; et que, dans ces positions, le renversement des plates-formes de transport est empêché par au moins un guidage latéral contre lequel les côtés larges peuvent s'appuyer.

9. Procédé selon l'une des revendications précédentes, caractérisé en ce que, pour le basculement de la plate-forme de transport vide à partir de sa position de base sur la table élévatrice de la station d'empilage, un ou plusieurs moyens d'appui qui empêchent son basculement dans sa position de base est et respectivement sont déplacé(s) de manière que ladite plate-forme de transport peut finalement basculer librement sur la table élévatrice, de préférence que la plate-forme de transport vide est appliquée contre le ou les moyen(s) d'appui dans une position de base inclinée par rapport à la verticale de telle façon que dès l'écartement du ou des moyen(s) d'appui, elle bascule d'elle-même sur la table élévatrice sous l'effet de la pesanteur, de préférence de telle façon que, en face des deux côtés larges de la plate-forme de transport sont prévus des moyens d'appui qui assurent sa position de base et dont au moins un moyen d'appui déplace ladite plate-forme de transport pour le basculement dans la direction de basculement désirée et au moins un autre moyen d'appui est retiré préalablement or simultanément du chemin de basculement de la plate-forme de transport.

10. Procédé selon l'une des revendications précédentes, caractérisé en ce que, lors de son basculement de la position de base dans la position horizontale sur la table élévatrice, la plate-forme de transport est en permanence empêchée de tomber librement par au moins un moyen d'appui qui la maintient, ou que ce moyen d'appui ne libère ladite plate-forme de transport que juste avant son entrée en contact avec ladite table pour la chute libre restante et/ou que la plate-forme de transport transférée par basculement à la table élévatrice est encore déplacée automatiquement en position horizontale dans une position définitive prédéterminée.

11. Installation pour transférer des plates-formes de transport à une table élévatrice d'une station d'empilage pour la mise en oeuvre du procédé selon l'une des revendications précédentes, **caractérisée en ce** que devant la station d'empilage (10) est disposé un dispositif de maintien (20) pour maintenir une plate-forme de transport (15) dans une position de base verticale ou inclinée par rapport à la verticale ; qu'elle comprend, en outre, des moyens permettant, par basculement dans la position horizontale, de charger la plate-forme de transport maintenue par ledit dispositif de maintien dans sa position de base, sur la table élévatrice (25) de la station d'empilage, qui se trouve dans une position de réception prédéterminée ; et qu'il est prévu des moyens de translation (30) pour amener la plate-forme de transport (15) basculée dans une position horizontale sur la table élévatrice de la station d'empilage, dans une position horizontale prédéterminée sur ladite table élévatrice.

12. Installation selon la revendication 11, caractérisée en ce que les moyens de translation comprennent au moins un poussoir (31) ou analogue déplaçable de manière automatique, et que de préférence deux poussoirs (31) pouvant être déplacés au moyen de systèmes de piston-cylindre (32) associés or analogues sont associés à chaque station d'empilage.

13. Installation selon l'une des revendications 11 or 12, caractérisée en ce que le dispositif de maintien (20) comprend un ou plusieurs moyens d'appui lequel ou lesquels sert ou servent à assurer l'appui latéral d'une plate-forme de transport placée dans la position de base devant la table élévatrice (25) et qui comporte(nt) au moins un organe d'appui (22, 22') qui, pour le basculement de la plate-forme de transport sur la table élévatrice, peut être amené dans une position provoquant et/ou permettant ledit basculement.

14. Installation selon l'une des revendications 11 à 13, caractérisée en ce qu'elle comprend au moins une bande transporteuse (19) pour le transfert des plates-formes de transport dans leur position de base devant la station d'empilage (10) et, de préférence, au moins une bande transporteuse (17) qui peut conduire à une rangée de stations d'empilage.

15. Installation selon la revendication 14, caractérisée en ce que devant chaque station d'empilage d'une rangée de stations d'empilage juxtaposées est disposée une bande transporteuse individuelle (19) particulière et que, en amont des bandes transporteuses individuelles (19) placées en ligne droite, est installée en alignement avec ces dernières une bande transporteuse d'amenée (17) pour l'amenée de plates-formes de transport (15) vides vers la bande transporteuse individuelle (19) qui lui est voisine.

16. Installation selon l'une des revendications 14 ou 15, caractérisée en ce que les plates-formes de transport (15) vides, peuvent être transportées sur la bande transporteuse aussi bien que sur toutes les bandes transporteuses (17, 19) dans des positions verticales ou inclinées par rapport à la verticale, lesdites plates-formes de transport reposant de préférence avec les petits côtés sur la bande transporteuse considérée laquelle est avantageusement constituée par un transporteur à rouleaux, et des moyens de guidage latéraux (22″) empêchant alors leur renversement.

17. Installation selon l'une des revendications 14 à 16, caractérisée en ce qu'au moins l'une des bandes transporteuses (17, 19) est une bande transporteuse entraînée, de préférence un transporteur à rouleaux entraîné, le transporteur à rouleaux (17, 19) pouvant présenter de préférence des rouleaux dont les zones de surface à symétrie de révolution sur lesquelles s'appuient les plates-formes de transport sont conformées de telle façon qu'elles empêchent un glissement latéral des plates-formes de transport.

18. Installation selon l'une des revendications 11 à 17, caractérisée en ce qu'elle comprend des moyens de commande pour la commande automatique du transfert des plates-formes de transport dans la position de base et du basculement sur la table élévatrice ainsi que de la translation sur celle-ci dans une position horizontale prédéterminée et/ou que le dispositif de maintien (20) destiné à assurer le maintien d'une plate-forme de transport dans sa position de base devant la station d'empilage (10) est conformé pour le maintien de plates-formes de transport de différentes épaisseurs.

19. Installation selon l'une des revendications 11 à 18, caractérisée en ce qu'à la station d'empilage (10) est disposée à une hauteur prédéterminée une table d'amenée stationnaire (13) placée devant la levée de la table élévatrice (25), sur laquelle peuvent être chargés les panneaux (16) à empiler respectivement sur la table élévatrice et à partir de laquelle lesdits panneaux peuvent être transférés à la table élévatrice et respectivement à au moins une pile en formation sur ladite table élévatrice ; et que le dispositif de maintien (20) destiné à maintenir une plate-forme de transport (15) dans sa position de base à cette station d'empilage est disposé et conformé de telle façon qu'il maintient la plate-forme de transport respective dans sa position de base au-dessous de ladite table d'amenée (13).

FIG.1

14

FIG. 2

FIG.3

EP 0 291 083 B1

FIG. 4

FIG.8

FIG.5

FIG.6

EP 0 291 083 B1

FIG.7

EP 0 291 083 B1

19